# EUROPÄISCHE PATENTSCHRIFT

(11) **EP 4 065 774 B1**
(45) Veröffentlichungstag und Bekanntmachung des Hinweises auf die Patenterteilung: **23.09.2026**
(21) Anmeldenummer: 20824461.6
(22) Anmeldetag: 26.11.2020
(51) Int. Cl.: E02D 3/08, E02D 3/054, E02D 15/04, C04B 28/00

(54) **VERFAHREN UND VORRICHTUNG ZUR LAGENWEISEN VERFÜLLUNG UND VERDICHTUNG VON BINDIGEN BAUSTOFFEN IN BOHRLÖCHERN**
METHOD AND DEVICE FOR THE LAYER-BY-LAYER FILLING AND COMPACTION OF COHESIVE BUILDING MATERIALS IN BOREHOLES
PROCÉDÉ ET DISPOSITIF DE REMPLISSAGE ET DE COMPACTAGE PAR COUCHES DE MATÉRIAUX DE CONSTRUCTION COHÉSIFS DANS DES TROUS DE FORAGE

(30) Priorität: 29.11.2019 DE 202019004885 U; 29.06.2020 DE 202020002792 U; 06.10.2020 DE 102020212614
(43) Veröffentlichungstag der Anmeldung: 05.10.2022
(73) Patentinhaber: Jammy Life GmbH, 10719 Berlin (DE)
(72) Erfinder: DALLWIG, Rainer, 14476 Potsdam (DE)
(74) Vertreter: Maikowski & Ninnemann Patentanwälte Partnerschaft mbB
(86) Internationale Anmeldenummer: PCT/EP2020/083491
(87) Internationale Veröffentlichungsnummer: WO 2021/105276

(56) Entgegenhaltungen:
- EP-A1- 1 229 172
- US-A1- 2004 115 011

## Beschreibung

Die vorliegende Erfindung betrifft ein Verfahren und eine Vorrichtung zur lagenweisen Verfüllung und Verdichtung von bindigen Baustoffen, insbesondere von bindigen Erdbaustoffen, in mindestens einem oberflächennahen Bohrloch und tiefer liegenden Erdhorizonten.

Oberflächennahe Bohrungen z.B. in den Bereichen Wasser- und Brunnenbau, Kampfmittelsondierung, Geothermie, Meßstellenbau, Deponiesicherung, Deichsanierung etc. werden zu hunderttausenden pro Jahr durchgeführt. Bohrungen sind notwendig, um z.B. den Untergrund zu erkunden, Wasser zu fördern, Geothermieheizungen zu installieren, Kampfmittel zu orten, Rohstoffe zu qualifizieren u.v.m.

In der Kampfmittelsondierung werden Areale, die anschließend zur Nutzung z.B. für Verkehrsinfrastruktur vorgesehen sind, großflächig erbohrt. Üblich sind Bohrungen von 100-120mm Durchmesser und 6-8m Tiefe, die Bohrungen werden teils als Punktsondierungen (wenige Bohrungen pro Verdachtsstelle), teils als großflächige Sondierungen im Raster 0,5 - 1,7m ausgeführt. Ein großer Teil der so erbohrten Areale wird nach der Feststellung der Kampfmittelfreiheit mit Straßen und Bahntrassen überbaut. Daher werden an die Verfüllung der Bohrungen besondere Anforderungen gestellt.

Jede Bohrung stört den Baugrund. Noch mehr als durch die eigentliche Bohrung wird der Baugrund aber durch die Verfüllung gestört. Regelmäßig kommt es zu Setzung, Erosion, Schrumpfung, Materialschwund oder im Bereich der Verfüllung und dadurch zu Instabilität des erbohrten und verfüllten Baugrundes.

Die Bohrungen sind stets fachgerecht wieder zu verfüllen. Hierfür gelten gesetzliche Vorschriften und technische Regelwerke. wie DVGW Vorschrift 120; DIN 4904:2017 geschüttete Abdichtungstone im Brunnenbau; DIN 4905:2019 hydraulisch erhärtende Suspensionen.

Die technischen Anforderungen an die Bohrlochverfüllung sind von Branche zu Branche unterschiedlich und sie hängen von der Art der weiteren Nutzung des erbohrten Geländes ab.

Grundsätzlich sind durchbohrte natürliche Dichthorizonte mit natürlichen hydraulischen Sperren zu verfüllen, um einen hydraulischen Kurzschluß zwischen potenziell verunreinigtem Oberflächenwasser mit reinem Grundwasser auszuschließen. Natürliche Dichthorizonte bestehen in der Regel aus einem natürlich gewachsenen Lehm- oder Tonhorizont, der auch als Grundwasserstauer bezeichnet wird. Unabhängig von der Art und Zielsetzung des Bohrverfahrens ist ein durchbohrter Grundwasserstauer grundsätzlich wieder hydraulisch zu verschließen.

Um diese hydraulische Dichtung zu erreichen, wird üblicherweise eine Schüttung mit schüttfähigen Quellton-Formkörpern oder Granulaten als Dichtelement in das Bohrloch eingebracht. Die Grenzen dieser Art der Dichtung sind einerseits die Einbautiefe und andererseits die freien Schüttöffnungen, z.B. die Ringräume oder die Bohrlochdurchmesser.

Größere Einbautiefen bei gleichzeitig geringeren Spaltöffnungen erreichen üblicherweise Suspensionen aus hydraulisch erhärtenden, meist zementgebundenen Baustoffen, die zu einer Suspension angemischt und durch Pumpen und in das Bohrloch eingeführten Schläuchen verpresst werden.

In manchen Branchen oder Anwendungsgebieten erweisen sich die beschriebenen Verfahren nicht als ideal. Insbesondere wenn beabsichtigt ist, das erbohrte Areal nach dem Bohrlochverschluss für technische Infrastruktur zu verwenden, in der es zu besonderen Lasten (horizontal, axial, dynamisch) kommen soll, so wird eine starre Zementsäule oder eine zunächst lockere Tonschüttung zu Risiken für die technische Infrastruktur.

Insbesondere im Bereich der Verkehrsinfrastruktur, z.B. im Bereich von Straßen, Autobahnen, Bahnanlagen oder Deichen wird gefordert, die Bohrlochdichtung so auszuführen, dass sie rasch so lastaufnehmend ist und sich bodendynamisch rasch so verhält, wie das erbohrte umgebende Gebirge.

Oberflächennahe Bohrungen werden überwiegend durch Schütten geeigneter Bodenbaustoffe (zumeist trocken geschüttete Quelltone) oder Verpressen zementgebundener Suspensionen verfüllt.

Das Schütten quellfähiger Abdichtungstone wie in DIN 4904:2017 beschrieben ist das am weitesten verbreitete Standardverfahren für die Verfüllung oberflächennaher Bohrungen. Die Verfüllung ist relativ günstig, kann ohne gesonderten maschinellen Aufwand ausgeführt werden und ist ökologisch weitestgehend unbedenklich. Allerdings kommt es bedingt durch die Bohrlochgeometrie und -beschaffenheit regelmäßig zu einer Brückenbildung beim Schütten der Quelltonkörper, sodass sich größere lufterfüllte Hohlräume im unterirdischen Verfüllkörper herausbilden. Diese Hohlräume sind ursächlich für spätere Setzungen nicht nur innerhalb der Füllkörper, sondern auch des Baugrundes insgesamt. Führen diese Setzungen im Bereich der dynamisch belasteten Verkehrsinfrastruktur zu auch minimalen Deformationen, kann es zu weitreichenden Folgeschäden kommen, in deren Verlauf Streckenschließungen und umfangreiche Streckensanierungen erforderlich werden.

Das Verpressen der Bohrlöcher mit zementgebundenen Suspensionen (im Fachgebrauch "Dämmer" genannt), das Verpressen wird im Fachgebrauch auch "Verdämmern" genannt, erzeugt zumeist starre Zementsäulen als Dichtelemente im Bohrloch. Diese starren Säulen sind dann willkommen, wenn der Baugrund nach der Erbohrung und Verfüllung z.B. als Baugrund und Gründung im Hoch- und Tiefbau verwendet werden soll. Die starren Zementsäulen stabilisieren - in Ergänzung etwa zu einer Pfahlgründung - den Baugrund. Im Bereich der dynamisch belasteten Verkehrsinfrastruktur allerdings sind starre Säulen eine potenzielle Gefahr für die Verkehrssicherheit. In den im engen Raster erbohrten Verkehrsanlagen, Gleiskörper, Fundamentbereiche von Brücken, Autobahnen und Verkehrsstrassen und Wasserstrassen führen starre Säulen zu unerwünschter und gefährlicher Vibration, aufschaukelnder Vibration und Resonanz. Als Folge der bei dynamischer Belastung vorstellbaren Resonanz ist ein Schaden im Gleisbett oder eine Entmischung homogener Bodengefüge vorstellbar, die um jeden Preis zu vermeiden ist. Zudem hinterlässt jede Verpressung von Flüssigbaustoffen sogenannte Absetztrichter an der Geländeoberkante. Diese Setzungen nach der flüssigen Verfüllung sind in der Regel so tief, dass der obere Bereich von 50-100 cm nach dem Aushärten der Suspension erneut zu verfüllen ist, was einen hohen Zusatzaufwand nach sich zieht.

Eine nicht sehr verbreitete Form der Bohrlochverfüllung ist das Stopfen von Ton-Kartuschen in das Bohrloch. Quellton-Granulate werden trocken in Pappröhren gefüllt, die an den Enden mit Verschlüssen und Kupplungsstücken versehen sind. Diese Kartuschen werden aneinandergehängt in Bohrlöcher geschoben, die umgebende Feuchtigkeit dringt allmählich in den Ton-Körper hinein und führt zu dessen Aufquellen. Das aus der Sprengtechnik stammende Produkt findet in der Bohrtechnik nur gelegentlich Verwendung, da das Bohrloch nur in Ausnahmefällen komplett gefüllt werden kann. Verkantet sich eine Papp-Kartusche im Bohrloch, ist eine Nachjustierung kaum noch möglich und ein lufterfüllter Hohlraum im darunterliegenden Horizont kaum vermeidlich.

Die Rückverfüllung von Bohrgut war lange Zeit sehr verbreitet, stößt aber heute an Grenzen der Zulässigkeit. In vielen Ausschreibungen und technischen Verfahrensanweisungen wird bei der Rückverfüllung von Aushub eine "lagenweise Verdichtung" gefordert. Diese lagenweise Verdichtung würde zwar den ursprünglich ungestörten Zustand wiederherstellen, es mangelt aber an einer Technik, mit der Boden im Bohrloch verdichtet werden kann. Die Erfindung ist eine neue Technik, mit der die Forderung des lagenweisen Verdichtens im Bohrloch hergestellt werden kann.

Das Einfüllen von Flüssigboden ist eine denkbare Form der Bohrlochverfüllung. Allerdings führt Flüssigboden regelmäßig zu Erosionsschäden im Bohrloch, was das Bodengefüge destabilisiert.

Die bisher bekannten Ansätze weisen somit eine Vielzahl von Nachteilen auf. Dies betrifft insbesondere Bohrungen, die im unmittelbaren Bereich der Verkehrsinfrastruktur vorgenommen werden, weil Fliegerbomben insbesondere aus dem II. Weltkrieg vordergründig die Verkehrsinfrastruktur getroffen haben.

Erstens mangelt es an Homogenität des Dichtelements, überwiegend aufgrund der häufig auftretenden Brückenbildung des geschütteten Dichtungsmaterials. Diese Inhomogenität stört den Baugrund, es kommt zu Setzungen oder zum Abrutschen des Verkehrskörpers.

Zweitens führen zementgebundene Verpressmassen zu starren Zementsäulen, die wegen der Aufschaukelung von Vibration zu Resonanz im Bauwerk der Verkehrsinfrastruktur beitragen.

Drittens ist ein verdichteter Einbau von bindigem Baustoff in Bohrlöchern - bislang - technisch nicht möglich bzw. baustellentechnisch nicht umsetzbar. Lagenweise verdichteter Einbau von bindigem Erdbaustoff ist üblich in allen flächigen Bauwerken, z.B. im Deponiebau, bei der Herstellung der Deponiesohle, bei der Herstellung der Deponieabdeckung, im Strassenbau, bei der Verdichtung von Baugrund, etc. Stets wird bindiges Erdbaumaterial lagenweise aufgebracht und mit Baugeräten (Walze, Rüttelplatte, Schaffußwalze, ...) lagenweise verdichtet. Ein lagenweise verdichteter Einbau in einem Bohrloch ist noch nicht möglich.

Viertens mangelt es an einer schnellen Belastungsfähigkeit nach dem Verfüllvorgang.

Das Dokument US 2004/115011A1 offenbart ein Verfahren zur lagenweisen Verfüllung und Verdichtung von bindigen Baustoffen, insbesondere von bindigen Bodenbaustoffen, in mindestens einem oberflächennahen Bohrloch, wobei der bindige Baustoff in das mindestens ein Bohrloch lagenweise eingebracht und unter Verwendung einer Fördervorrichtung umfassend einen Stopfkolben verdichtet wird.

Das der vorliegenden Erfindung zugrunde liegende Problem bestand somit darin, eine verbesserte Lösung zur Verfüllung von Bohrlöchern bereitzustellen, die zu keiner Störung des Baugrundes führen.

Diese Aufgabe wird mit einem Verfahren mit den Merkmalen des Anspruchs 1 gelöst.

Entsprechend wird ein Verfahren zur lagenweisen Verfüllung und Verdichtung von bindigen Baustoffen, insbesondere von bindigen Bodenbaustoffen, in mindestens einem oberflächennahen Bohrloch, wobei der bindige Baustoff in das mindestens ein Bohrloch eingebracht wird und unter Verwendung einer Fördervorrichtung umfassend einen Schubkettenvortrieb und einen mittels des Schubkettenvortriebes angetriebenen Stopfkolben lagenweise verdichtet wird, wobei der mindestens eine Stopfkolben an der einer starren Schubkette des Schubkettenvortriebs über eine Gelenkverbindung angeordnet ist, und wobei der bindige Baustoff mindestens ein Absorptionsmittel in Form eines Hydrogels und verdichtungsfähigem Bodenbaustoff umfasst.

Das vorliegende Verfahren ermöglicht erstmalig eine maschinelle lagenweise Verdichtung von bindigen Erdbaustoffen in einem Bohrloch und in tiefer liegenden Erdhorizonten. Dies wird insbesondere durch die Verwendung eines spezifischen Bindemittels bzw. Dichtmittels als Baustoff in Kombination mit der Fördervorrichtung bzw. Verfüllmaschine erreicht, deren Wirkprinzip auf einer starren Schubkette zum Vortrieb bindiger Massen mit gleichzeitiger Verdichtung durch einen an der Schubkette vorgesehenen Stopfen basiert. Zwar ist die Anwendung von starren Schubketten v.a. in der horizontalen und vertikalen Bewegung von Bühnen, Lasten wie Paletten, Containern, als Antrieb von versenkbaren Fenstern u.v.m. bekannt, jedoch als Antrieb von Kolben und für den Vortrieb in Röhren bzw. Bohrlöchern ist die starre Schubkette bisher noch nicht beschrieben.

Mit dem vorliegendem Verfahren zur lagenweisen Verdichtung ergibt sich ein kompaktes Dichtelement, welches um ca. 1/3 gegenüber der üblichen Schüttung komprimiert ist. Das so eingebaute Dichtelement entwickelt innerhalb kurzer Zeit annähernd die geotechnischen Kennwerte von Ton in der ursprünglichen Lagerstätte (Dichte, kf-Wert). Zudem wird das Auftreten von Hohlstellen reduziert.

Mit dem vorliegenden Verfahren können Bohrungen aller Art verfüllt und verdichtet werden. Die zu verfüllenden Bohrungen können Bohrungen im Spezialtiefbau oder Sondierungsbohrungen wie zur Kampfmittelsondierung, Baugrunderkundung, Bohrungen zu wissenschaftlichen Zwecken, Geothermiebohrungen, Bohrungen zum Zwecke geologischer Erkundungen z.B. im Bereich der seismischen Messungen, zur Untergrunderkundung etc. umfassen.

In einer Ausführungsform des vorliegenden Verfahrens ist das mindestens eine Bohrloch mit einem Schutzrohr ausgekleidet und der bindige Baustoff wird, insbesondere portionsweise (mengenweise), in das Schutzrohr eingefüllt. Das Schutzrohr dient somit als Füllrohr. Derartige Schutzrohre werden insbesondere in der Kampfmittelsondierung in das Bohrloch eingeführt. Die Schutzrohre weisen üblicherweise einen Durchmesser von 40 bis 120 cm, bevorzugt von 50 bis 110 cm, insbesondere bevorzugt von 60 bis 90 cm auf. Die Schutzrohre bestehen bevorzugt aus thermoplastischen Materialien wie Polyethylen (PE) oder Polyvinylchlorid (PVC). Die Schutzrohre können einteilig oder bevorzugt aus verschraubten Segmenten bestehen.

In einer weiteren Ausführungsform des vorliegenden Verfahrens schiebt der Stopfkolben der Fördervorrichtung nach Einfüllen einer ersten Portion (bzw. vorgegeben Menge) des bindigen Baustoffes in das Bohrloch den bindigen Baustoff durch das Schutzrohr bis zum Bohrlochtiefsten des Bohrloches und verdichtet den bindigen Baustoff durch eine Hin- und Her-Bewegung des Stopfkolbens im Bohrloch. Diese im Wesentlichen vertikale Bewegung des Stopfkolbens wird durch die Schubkette angetrieben und durch eine Steuerungstechnik des Schubketten-Antriebes der Fördervorrichtung eingestellt. So wird durch einen Drucksensor der während der Bewegung des Kolbens im Bohrloch ansteigende Gegendruck an der jeweiligen Position des Kolbens gemessen. Je nach Druckaufbau erfolgt ein Umschalten von "schneller Fahrt" auf "langsame Fahrt = Verdichtung". Die Steuerungstechnik führt eine stopfende Bewegung des Stopfkolbens durch geeignete hin-und-her-Bewegung aus und verdichtet auf diese Weise den bindigen Erdbaustoff im Bohrloch.

In einer weiteren Ausführungsform des vorliegenden Verfahrens wird das Schutzrohr während der Befüllung des Bohrloches mit dem bindigen Baustoff schrittweise in Abhängigkeit von der eingetragenen Menge an bindigem Baustoff aus dem Bohrloch herausgezogen. Das als Füllrohr genutzte Rohr wird entsprechend des Verfüllfortschritts maschinell aus dem Bohrloch gezogen; d.h. das Schutzrohr wird jeweils nur so weit aus dem Bohrloch herausgezogen, wie die Menge an bindigem Baustoff das Bohrloch ausfüllt; somit ist der Abschnitt des Bohrloches, der nicht mit dem bindigen Baustoff ausgefüllt ist, vom Schutzrohr gestützt. Die Verdichtung findet außerhalb (=unterhalb) des Füllrohrs statt, also am Bohrlochtiefsten.

In einer weiteren Ausführungsform des vorliegenden Verfahrens wird nach dem Verdichten der ersten Portion bzw. ersten Menge des bindigen Baustoffes in dem mindestens einen Bohrloch der Stopfkolben aus dem Bohrloch herausgefahren, eine weitere zweite Portion bzw. zweite Menge des bindigen Baustoffes in das Schutzrohr im Bohrloch eingefüllt, der Stopfkolben wieder in das Schutzrohr eingeführt und die weitere Portion des bindigen Baustoffes durch die Bewegung des Stopfkolbens verdichtet.

Dieser Vorgang des portionsweisen Auffüllens und Verdichten des bindigen Baustoffes im Bohrloch wird solange wiederholt, bis das Bohrloch vollständig gefüllt ist und mit der Geländeoberfläche bzw. Geländeoberkante (GOK) abschließt.

Die Portionen bzw. Mengen an bindigen Baustoff, die mit dem vorliegenden Verfahren in das Bohrloch eingeführt werden, sind bevorzugterweise jeweils gleich, so dass die verdichteten Lagen bevorzugt jeweils die gleiche Dicke aufweisen. So kann der bindige Baustoff jeweils in Portionen oder Mengen von 5-15 kg, bevorzugt 8-12 kg (bei einer 130mm Bohrlochgröße) in das Bohrloch eingeführt werden. Bevorzugterweise ergeben sich nach der Verdichtung im Bohrloch Lagen jeweils mit einer Dicke zwischen 30 und 80 cm, bevorzugt zwischen 40 und 60 cm, z.B. 50 cm. Die Anzahl der verdichteten Lagen variiert von der Tiefe des Bohrloches und kann z.B. zwischen 5 und 20 Lagen, bevorzugt zwischen 10 und 15 Lagen, z.B. bei 12 Lagen liegen.

Wie oben bereits angedeutet ist die Art des verwendeten bindigen Baustoffes ebenfalls von Bedeutung für das vorliegende Verfahren.

So umfasst der verwendete bindige Baustoff zum Verfüllen und Verdichten von Bohrlöchern mindestens ein Absorptionsmittel in Form eines Hydrogels und einen verdichtungsfähigen Bodenbaustoff.

Unter einem verdichtungsfähigen Bodenbaustoff sind insbesondere solche Materialien zu verstehen, die zur Verdichtung zusammengedrückt oder gestopft werden könne. Bevorzugte Bodenbaustoffe sind dabei quellfähige Tonmineralien. Weiterhin kann zur Herstellung des verdichtungsfähigen Baustoffs auch z.B. Bodenaushub, Bohraushub, Bohrgut oder andere überwiegend mineralische Bodenarten verwendet werden. Wichtig ist die Vermischung von a) wasserspeicherndem Hydrogel und b) verdichtungsfähigem Bodenbaustoff.

Das Baustoffkonzept besteht aus zwei Komponenten: a) dem wasserspeichernden auf einem Superabsorber basierenden Hydrogel-Pulver, welches mit Wasser angerührt zu einem Wasser speichernden Gel wird, dieses als Grundlage zur Aufnahme von b) quellfähigen Baustoffgranulaten oder -pellets durch Mischung aus a) und b).

In einer Ausführungsform ist der vorliegende bindige Baustoff herstellbar aus einer Mischung enthaltend 50-70 Gew%, bevorzugt 60 Gew% quellfähigem Tonmineral, 0,1 - 0,5 Gew%, bevorzugt 0,2 Gew% eines Hydroygels und 39,5 - 39,9 Gew%, bevorzugt 39,8 Gew% Wasser (jeweils bezogen auf die Gesamtmenge an Baustoff).

Bevorzugt enthält der vorliegende bindige Baustoff ein Hydrogel auf Acrylbasis. So wird das Hydrogel aus einem als Superabsorber bezeichneten vernetzten Polyacrylat mit Wasser gebildet, welches dort gespeicherte Feuchtigkeit nicht sofort, sondern erst allmählich an das umgebende quellfähige Tonmineral abgibt und so mit einem verzögerten Effekt zu einer Quellung führt.

In einer besonders bevorzugten Ausführungsform wird als das mindestens eine Hydrogel bzw, Absorptionsmittel ein Copolymer aus Acrylsäure und Acrylat verwendet. Derartige Acrylhaltige Absorptionsmittel mit Partikelgrößen zwischen 100-1000 µm sind auch als Superabsorber bekannt, die in der Lage sind, ein Vielfaches ihres Eigengewichtes an polaren Flüssigkeiten wie zum Beispiel Wasser aufzunehmen. Bei Aufnahme der Flüssigkeit quillt der Superabsorber auf und bildet ein Hydrogel.

In einer weiteren Ausführungsform des vorliegenden bindigen Baustoffes ist das quellfähige Tonmineral ausgewählt aus einer Gruppe umfassend Bentonit, Montmorillonit, Kaolinite, Smektite, Illite, Chlorite oder Gemische davon.

Bentonit, benannt nach der Benton-Formation, Fort Benton Montana, ist ein Gestein, das eine Mischung aus verschiedenen Tonmineralien ist und als wichtigsten Bestandteil Montmorillonit (60-80 %) enthält, was seine starke Wasseraufnahme- und Quellfähigkeit erklärt. Weitere Begleitmineralien sind Quarz, Glimmer, Feldspat, Pyrit oder auch Calcit. Es entsteht durch Verwitterung aus vulkanischer Asche.

Ein bekannter Vertreter der Tonmineralinen ist das Montmorillonit, welches als dioktaedrisches Dreischicht-Silikat mit Aufbau Tetraederschicht - Oktaederschicht - Tetraederschicht der Gruppe der Smektide angehört und ein großes Quellvermögen aufweist.

Mixedlayer können strukturell aus sehr unterschiedlichen Wechsellagerungsschichten bestehen z.B. Kaolinit/Smectit, Chlorit/Vermikulit, Glimmer/Vermikulit oder sehr häufig Wechsellagerung von Illit/Smectit oder Illit/Montmorillonit. Dadurch sind vielfältigere Austauschreaktionen von Kationen und Anionen möglich als bei reinen Montmorilloniten. Deshalb sind Mixedlayer in einer Kombination mit anderen reaktiven Mineralen besonders gut geeignet für die Bindung von in Lösung befindlichen Stoffen in biologischen Systemen.

Vorliegend wird das quellfähige Tonmineral mit einer Körnung zwischen 1 und 20 mm, bevorzugt zwischen 5 und 18 mm, insbesondere bevorzugt zwischen 10 und 16 mm verwendet.

Der vorliegende bindige Baustoff (oder Dichtmaterial) wird bevorzugt durch Vermischen der angeführten Inhaltsstoffe bzw. Komponenten auf der Baustelle und kurz vor der Verwendung hergestellt.

Dabei wird zunächst a) aus einem vernetzten Polyacrylat und Wasser ein annähernd stichfestes, tropffreies Hydrogel hergestellt und vorgelegt und anschließend b) ein Granulat aus quellfähigen Tonmineralen unter Mischen in das vorgelegte Hydrogel zugegeben, wodurch die die Tongranulate weitgehend zerstörungsfrei mit Hydrogel benetzt werden.

Das so hergestellte bindige Dichtmaterial oder Baustoffmaterial weist eine feste, krümelige Konsistenz und eine Feuchtigkeit von 15 bis 50% Wassergehalt auf.

So kann der Baustoff in einem integrierten Mischwerk, zum Beispiel in einem Trommel- oder Wellenmischwerk rezepturabhängig angemischt und entsprechend der Bohrlochquerschnitte und der Bohrlochtiefe portionsweise in das Füllrohr eingeführt werden.

Die Tongranulate sind unregelmäßig von wassererfüllten aber festen Hydrogel-Partikeln umgeben. Diese Wasser-Gel-Partikel geben das Wasser unter Druck ab, wodurch das Wasser in den quellfähigen Ton gelangt bzw. diffundiert, der dadurch aufquillt und zu einer dichten, homogenen Tonmasse wird. Somit entsteht durch selbsttätiges Quellen der enthaltenen quellfähigen Tonminerale nach der Applikation im Bohrloch ohne weitere Zugabe von Wasser eine feste, sowohl teilweise elastische, als auch teilweise plastische Dichtungsmasse.

Der Vorteil des vorliegend verwendeten Baustoffes bzw. Dichtmaterials besteht darin, dass das Dichtmaterial nach seiner Herstellung und Einbringung in das Bohrloch nach kurzer Zeit ähnliche bodenmechanische Merkmale und Eigenschaften aufweist, wie das umgebende Gebirge bzw. Boden, insbesondere hinsichtlich der Feuchtigkeit und der Dichte.

Das Verdichten erfüllt also zwei Zwecke: Durch den Druck beim Verdichten gelangt Wasser so in die Zwischenschichten des Tonmaterials, dass dieses quillt und etwa wieder die Dichte annimmt, die es zuvor im Tagebau hatte. Zudem wird der Baustoff mit dem erfindungsgemäßen Verfahren lagenweise im Bohrloch verdichtet.

Das vorliegende bindige Baustoffmaterial bzw. Dichtmaterial kann aufgrund der günstigen bodenmechanischen Eigenschaften als elastoplastische mineralische Dichtung auch im Brunnenbau, im Rohrleitungsbau, für die Dichtung von Gasbrunnen, von Endlagern und bergmännischer Verwahrung und als Feuchtigkeitssperre in der Bauwerksabdichtung eingesetzt werden.

Die im vorliegenden Verfahren zum Einsatz kommende Fördervorrichtung zum Verfüllen und Verdichten von Bohrlöchern umfasst mindestens eine Schubketteneinheit umfassend einen Schubkettenvortrieb und einen mittels des Schubkettenvortriebs angetriebenen Stopfkolben.

Gemäß der Erfindung ist der mindestens eine Stopfkolben an der Schubkette des Schubkettenvortriebs über eine Gelenkverbindung angeordnet. Dabei wirkt die Schubkette unterstützend; der Stopfeffekt wird durch das Eigengewicht des Kolbens bewirkt. Der Stopfkolben kann z.B. aus Edelstahl oder geeigneten Metalllegierungen bestehen.

Der Stopfkolben weist eine zylindrische Form auf, wobei die Länge des Kolbens bevorzugt mindestens das Doppelte des Bohrlochdurchmessers beträgt; d.h. bei einem kleinen Bohrlochdurchmesser wird ein kürzerer Kolben bevorzugt, während bei einem größeren Bohrlochdurchmesser ein längerer Kolben bevorzugt wird. Die Verwendung einer Scheibe als Stopfkolben ist nicht wünschenswert, da bei einer Scheibe die Gefahr des Verkantens im Bohrloch besteht.

Die vorliegende Fördervorrichtung kann auf einem Fahrzeug oder Baugerät montiert sein. So kann die Fördervorrichtung mobil, vorzugsweise auf einem geländegängigen Fahrzeug montiert sein, auf einem Raupenkettenfahrwerk eigenständig fahrbar montiert sein, oder auch auf einem Rahmen, der mit Baugeräten wie etwa Radlader oder Gabelstapler bewegt wird, montiert sein. Dies ermöglicht verschiedene Positionierungen der Fördervorrichtung. So kann die Fördervorrichtung auf dem Fahrzeug oder Baugerät über dem zu füllenden Bohrloch positioniert werden. Eine andere Variante ist, dass die Fördervorrichtung auf dem Fahrzeug in die Nähe der Füllstelle transportiert wird, dort unter Verwendung eines Krans, der z.B. an dem Fahrzeug vorgesehen ist, vom Fahrzeug abgeladen wird und über dem zu füllenden Bohrloch positioniert wird.

In einer Ausführungsform wird ein kettengetriebenes Transportmittel bzw. Fahrzeug verwendet. Optional ist das Transportmittel in der Lage auf Bahnschienen zu fahren bzw. kann von einem Bohrbagger gezogen werden.

Auf dem Transportmittel ist ein Aufbausatz angeordnet, der es ermöglicht, die darauf befindliche Schubketteneinheit schwenkbar und seitlich ausfahrbar zu bewegen. Der Aktionsradius sollte bevorzugt bis 2m um Mittelpunkt (um die X/Y-Achse) betragen. Ein derartiger Aufbausatz kann z.B. ein schwenkbarer Kreuztisch sein.

Der Antrieb der vorliegenden Vorrichtung ist bevorzugt hydraulischer Art.

Auf dem Transportmittel ist des Weiteren ein Aufnahmerahmen vorgesehen, der die Schubketteneinheit mit Schubkette und einen vertikalen Antrieb (Z-Achse) umfasst. Die Steuerung der Z-Achse ist mit der Schwenkbewegung X/Y-Achse harmonisiert, und erfolgt bevorzugt über einen Joystick.

Die vorliegende Fördervorrichtung ist bevorzugt an dem Aufnahmerahmen befestigt bzw. mit diesem verbunden und kann als Einheit mit dem Aufnahmerahmen entweder auf dem Transportmittel angeordnet sein (z.B. zum Zwecke des Transportes) oder auch separat von Transportmittel verwendet werden (z.B. unmittelbar an der Füllstelle).

Die Schubketteneinheit kann eine vertikale Höhenverstellung (entlang der Z-Achse) bis 2 m über der Geländeoberkante aufweisen. Durch die Höhenverstellung ist es möglich, dass das gezogene Füllrohr leicht abgedreht werden kann, wenn der Stopfkolben am oberen Anschlag ist.

Des Weiteren weist die vorliegende Fördervorrichtung eine Vorrichtung zur Positionierung des Stopfkolbens über dem Füllrohr auf. Mittels Laser (grüne Diode 575 nm, rote Diode 650nm) werden Füllrohr und Stopfkolben angesteuert; mit einem Positionierungslaser wird der Stopfkolben über dem Füllrohr positioniert.

Bevor der Stopfkolben das Füllmaterial durch Druck verdichtet, muss das Füllrohr um die Höhe der eingebauten Lage aus dem Bohrloch gezogen werden. Der Baustoff darf nicht im Füllrohr verdichtet werden. Zum Ziehen des Füllrohrs bietet sich die Schubkette an, das sich diese bereits im Füllrohr befindet. Entsprechend ist gemäß einer weiteren Ausführungsform eine Vorrichtung zum Ziehen des Füllrohrs aus dem Bohrloch in Anhängigkeit von der Verfüllung des Bohrloches vorgesehen. Diese kann als Mitnehmerhaken oder Bremsvorrichtung an der starren Schubkette vorgesehen sein. Diese verbinden sich mit dem Füllrohr, und ermöglichen ein Ziehen des Füllrohrs bei langsamer Fahrt der Schubkette aus dem Bohrloch.

Zum Ziehen des Füllrohrs aus dem Bohrloch wird ein Backengreifer verwendet. Der Backengreifer umgreift das zu ziehende Füllrohr, zieht das Füllrohr und dreht das Füllrohr nach dem Herausziehen, z.B. am Schraubengewinde ab.

In einer weitergehenden Ausführungsform weist die vorliegende Vorrichtung eine Schnellwechseleinheit (als Baggeranbaugerät) auf. Hierzu wird der Aufnahmerahmen mit einer Rotationsvorrichtung, z.B. Tiltrotator verbunden. Ein derartiger Tiltrotator ermöglicht ein schnelles Lösen des Aufnahmerahmens inklusive Schubketteneinheit vom Transportmittel, und kann als Mono-Gerät am Bagger verwendet werden.

In einer weiteren Ausführungsform weist die Fördervorrichtung eine Steuerungstechnik zur Steuerung des Schubkettenantriebs auf. Die Steuerungstechnik des Schubketten-Antriebes misst sensorisch (Drucksensor) den ansteigenden Gegendruck an der jeweiligen Position des Stopfkolbens im Bohrloch. Zudem steuert die Steuerungstechnik eine stopfende Bewegung des Stopfkolbens durch geeignete hin-und-her-Bewegung aus und verdichtet auf diese Weise den bindigen Erdbaustoff im Bohrloch.

In einer weiteren Ausführungsform weist die Fördereinrichtung eine Schnittstelle zur Steuerungstechnik auf, über die elektronische Daten zur Verdichtung, Einbaumenge und Geoposition bereitgestellt werden können. Dies ermöglicht eine elektronische Qualitätsdokumentation.

In einer Ausführungsform stellt die Steuerungstechnik, die die Schubketteneinheit steuert, über eine Datenschnittstelle zusätzlich folgende Daten zur Verfügung:
∘ Geolocation des verfüllten Bohrlochs über GPS-Koordinaten, ausgegeben in Längengrad und Breitengrad, dokumentiert z.B. in Form eines QR Codes;
∘ Datum, Uhrzeit;
∘ Verpressteufe = Lage des Bohrlochtiefsten, angegeben in m unter GOK;
∘ Grundwasserstand im Bohrloch, angegeben in m unter GOK;
∘ Anpressdruck bei der Verfüllung und Verdichtung der Lage, angegeben in Si-Einheit, z.B. N/qm;
∘ Mächtigkeit der verpressten Lage, angegeben in m unter GOK;
∘ Weitere geophysikalisch wichtige Messdaten durch Sensoren, Daten wie z.B. Wasserqualität (Salinität),
∘ Weitere numerische und alphanumerische Daten / Freitext durch Handeingabe am Terminal der Steuerung

Eine im Stopfkolben optional verbaute Kamera liefert Fotos, die den Datensatz ergänzen.

Die Erfindung wird nachfolgend anhand von Ausführungsbeispielen unter Bezugnahme auf die Figuren im Detail erläutert. Es zeigen:
- Figur 1: eine erste schematische Darstellung des vorliegenden Verfahrens;
- Figur 2: eine zweite schematische Darstellung des vorliegenden Verfahrens; und
- Figur 3: eine schematische Darstellung einer Ausführungsform der vorliegend verwendeten Schubketteneinheit;
- Figur 4: eine schematische Darstellung einer Ausführungsform der vorliegenden Fördervorrichtung; und
- Figur 5: eine schematische Darstellung einer weiteren Ausführungsform der vorliegenden Fördervorrichtung.

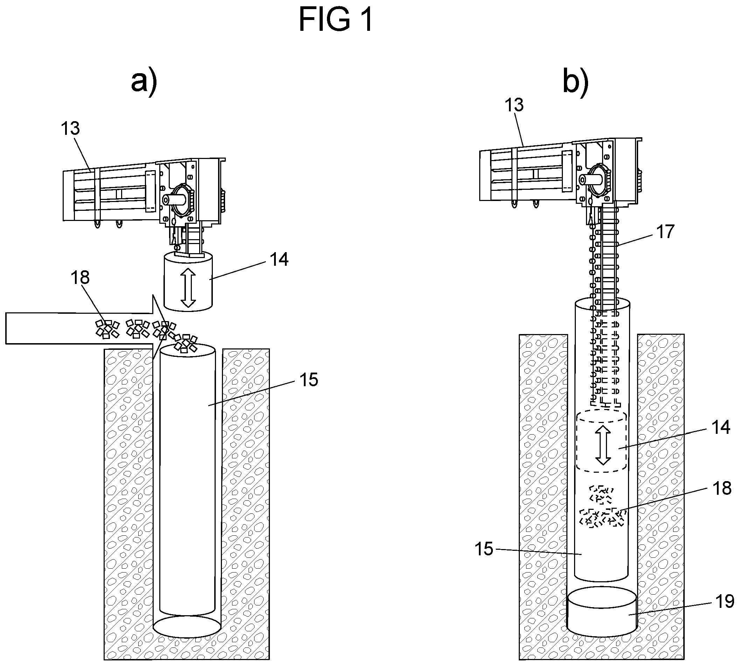

Figur 1 zeigt die Verfahrensschritte zum ersten Befüllen eines Bohrloches. Der bindige Baustoff 18 wird in einem Wellenmischer oder Rotationsmischer hergestellt und portionsweise in das Füllrohr 15 bzw. Schutzrohr des Bohrloches gefüllt (Schritt a).

Der mit der Schubkette 17 der Verfüllmaschine verbundene Stopfkolben 14 schiebt den Baustoff durch das Füllrohr 15 zur Sohle des Bohrloches. Die Schubkette 17 ist das Antriebsaggregat der Maschine, sie schiebt und zieht den Stopfkolben 14. Das Füllrohr 15 wird mit dem Fortschritt der Verfüllung aus dem Bohrloch gezogen. An der Sohle entsteht ein erste Lage der verdichteten Verfüllung 19 (Schritt b).

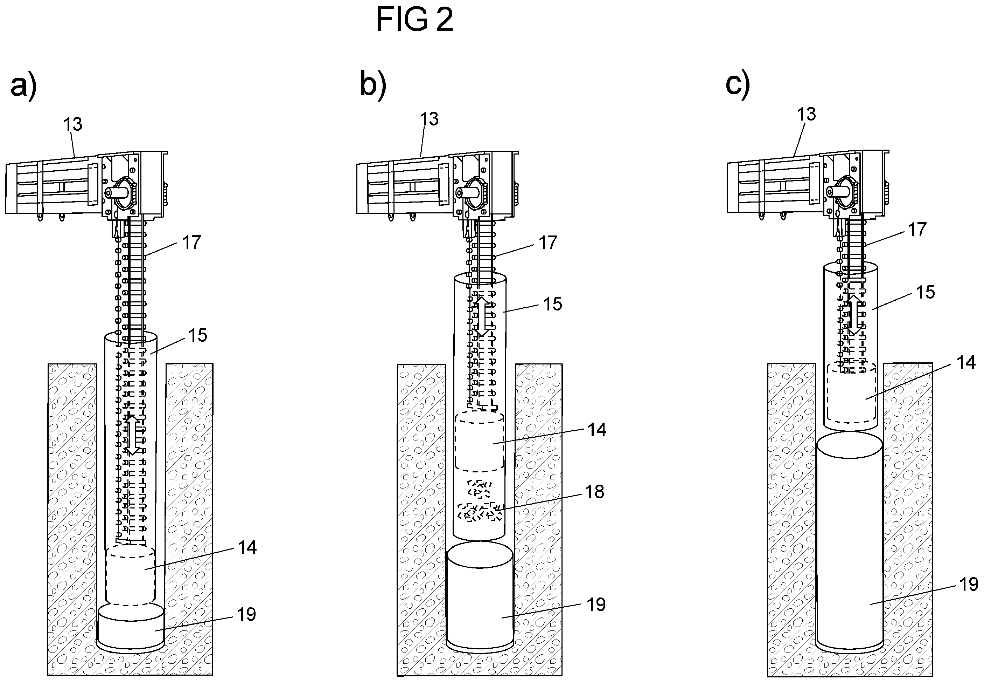

Figur 2 zeigt die weiteren Schritte a)-c), die zu einer lagenweisen Auffüllung des Bohrloches und Verdichtung des bindigen Baustoffes im Bohrloch führt. Die Schubkette 17 mit Stopfkolben 14 wird aus dem Füllrohr 15 herausgefahren, das Füllrohr 15 wird mit der nächsten Portion Dichtbaustoff 18 gefüllt, der Stopfkolben 14 wird wieder in das Füllrohr 15 eingeführt.

Dieser Vorgang des portionsweisen Auffüllens und Verdichten des bindigen Baustoffes 18 im Bohrloch wird solange wiederholt, bis das Bohrloch vollständig gefüllt ist und mit der Geländeoberfläche bzw. Geländeoberkante (GOK) abschließt.

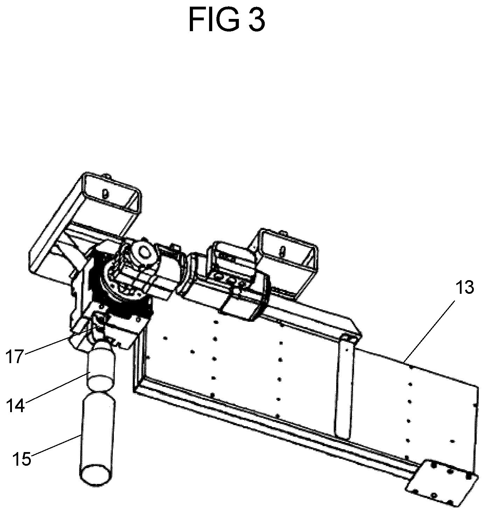

Figur 3 zeigt schematisch eine Ausführungsform der erfindungsgemäßen Schubketteneinheit 13. Diese Schubketteneinheit 13 umfasst eine Schubkette 17 mit einem Schubkettenvortrieb und einen mittels des Schubkettenvortriebs angetriebenen Stopfkolben 14.

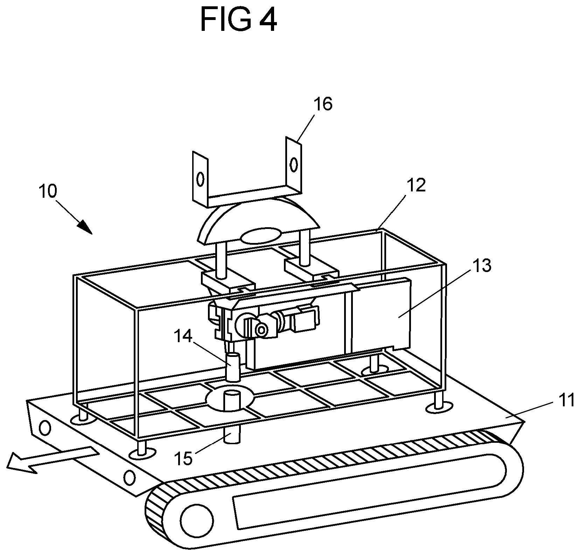

Figur 4 zeigt schematisch eine Ausführungsform der erfindungsgemäßen Auffüllvorrichtung 10 umfassend die in Figur 3 dargestellte Schubketteneinheit 13 mit Stopfkolben 14 und Füllrohr 15.

Die Schubketteneinheit 13 ist Teil eines Aufnahmerahmens, der auf einem kettengetriebenen Transportmittel 11 (horizontal) angeordnet ist. Hierzu ist auf dem Transportmittel ein Aufbausatz (nicht gezeigt) angeordnet, der es ermöglicht, die darauf befindliche Schubketteneinheit schwenkbar und seitlich ausfahrbar zu bewegen (entlang X/Y-Achse).

Die Schubketteneinheit kann eine vertikale Höhenverstellung (entlang der Z-Achse) bis 2 m über der Geländeoberkante aufweisen. Durch die Höhenverstellung ist es möglich, dass das gezogene Füllrohr 15 leicht abgedreht werden kann, wenn der Stopfkolben 14 am oberen Anschlag ist.

Der Aufnahmerahmen 12 ist mit einer Rotationsvorrichtung 16, z.B. Tiltrotator verbunden. Ein derartiger Tiltrotator 16 ermöglicht ein schnelles Lösen des Aufnahmerahmens 12 inklusive Schubketteneinheit 13 vom Transportmittel 11, so dass eine Anwendung als Mono-Gerät an einem Bagger möglich.

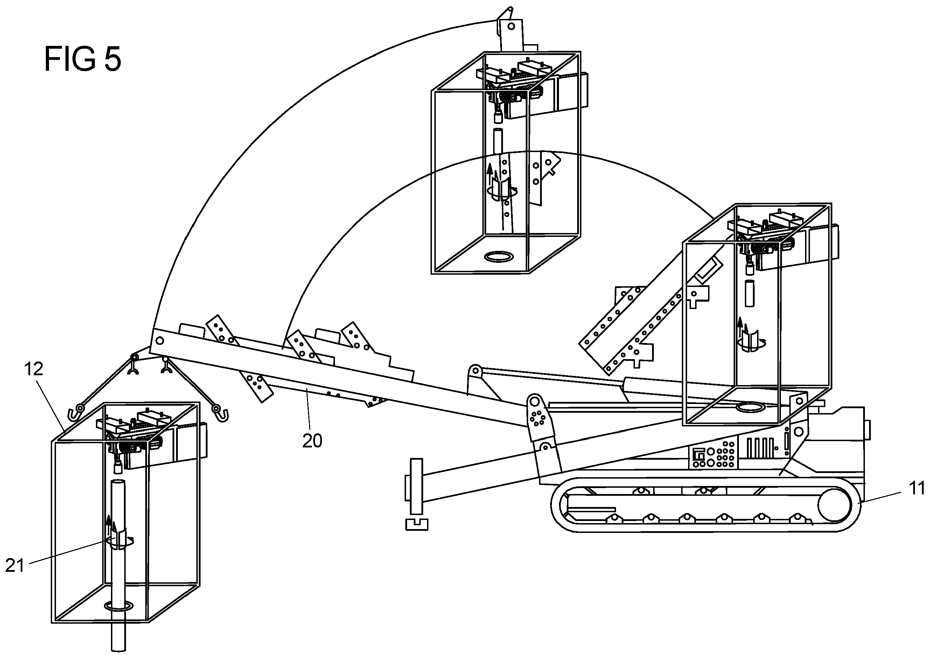

Figur 5 zeigt schematisch eine weitere Ausführungsform der erfindungsgemäßen Auffüllvorrichtung 10 umfassend die in Figur 4 dargestellte Schubketteneinheit 13 mit Stopfkolben 14 und Füllrohr 15, die mit dem Aufnahmerahmen 12 verbunden ist. Im Unterschied zur Ausführungsform der Figur 5 ist der Aufnahmerahmen 12 mit der Schubketteneinheit 13 vertikal auf einem Baugerät als Transportmittel 11 angeordnet.

Das Baugerät der Figur 5 weist zusätzlich eine schwenkbare Hebevorrichtung 20 auf. Hiermit ist es mögich die Fördervorrichtung auf dem Baugerät die Nähe der Füllstelle zu transportieren, dort unter Verwendung der schwenkbaren Hebevorrichtung die Födervorrichtung umfassend Aufnahmerahmen 12, Schubketteneinheit 13 mit Stopfkolben 14 und Füllrohr 15 über dem Bohrloch zu positionieren.

Zum Ziehen des Füllrohrs aus dem Bohrloch wird ein Backengreifer 21 verwendet. Der Backengreifer 21 umgreift das zu ziehende Füllrohr, zieht das Füllrohr und dreht das Füllrohr nach dem Herausziehen, z.B. am Schraubengewinde ab.

### Ausführungsbeispiel 1: Verdichtungsverfahren für ein Bohrloch aus der Kampfmittelsondierung

Der Kampfmittelsondierer bohrt im Raster von ca. 1,20 x 1,20m Bohrlöcher von 100-130mm Durchmesser, i.d.R. 6 m tief. Nach dem Bohren führt der Sondierer das Sondierungsschutzrohr in das Bohrloch ein. Das Sondierungsschutzrohr ist ein üblicherweise 56mm Durchmesser 6 m langes PE oder PVC Rohr, welches auch aus verschraubten Segmenten bestehen kann.

Der Sondierer führt ein magnetisch sensitives Messinstrument an einem Kabel in das Schutzrohr bis zum Bohrlochtiefsten. Nachdem die Messung abgeschlossen ist lässt der Sondierer das Bohrloch verrohrt zurück, bis der Verfüller das Bohrloch verfüllt.

Die auf Raupenketten fahrende geländegängige Verfüllmaschine wird über dem Bohrloch positioniert. Das zuvor in die Bohrung eingeführte Sondierungsschutzrohr, welches einen etwas größeren Durchmesser von 94/104mm (innen/aussen) hat, und aus zusammengeschraubten Segmenten von je 1,50m Länge besteht wird mit einer mittels Doisiertechnik bestimmbaren Menge Dichtbaustoff befüllt (Schütt-Schurre, Förderschnecke, Schieber o.ä.). Das Sondierungsschutzrohr wird hier zum Füllrohr.

Der an der Schubkette der Verfüllmaschine mittels Gelenk angebrachte Stopfkolben wird in das Füllrohr eingeführt und mit der Schubkette angetrieben. Dadurch wird das Baumaterial durch das Füllrohr geschoben, bis das Bohrlochtiefste erreicht ist. Die Steuerungstechnik des Schubketten-Antriebes misst sensorisch (Drucksensor) den ansteigenden Gegendruck an der jeweiligen Position des Stopfkolbens und schaltet von "schneller Fahrt" auf "langsame Fahrt = Verdichtung" um. Die Steuerungstechnik führt eine stopfende Bewegung des Stopfkolbens durch geeignete hin-und-her-Bewegung aus und verdichtet auf diese Weise den bindigen Erdbaustoff.

Mit dem Fortschritt der lagenweise Befüllung und Verdichtung wird das Füllrohr gezogen. Das heisst: Die Verdichtung findet ausserhalb (=unterhalb) des Füllrohrs statt, also am Bohrlochtiefsten.

Die Schubkette mit Stopfkolben wird aus dem Füllrohr herausgefahren, das Füllrohr wird mit der nächsten Portion Dichtbaustoff gefüllt, der Stopfkolben wird wieder in das Füllrohr eingeführt.

Alle rechnerisch 3 Lagen wird ein Segment des Füllrohrs abgeschraubt. Bei 6m Rohrlänge (entspricht der Bohrlochtiefe) ergeben sich 12 Fahrten der Schubkette und Lagen zu je 50cm Verfüllstrecke und Verdichtung. Am Ende ist das Bohrloch lagenweise verdichtet befüllt, 6m Bohrlochtiefe hat dann 12 verdichtete Lagen je 50cm.

Verfahrzeit der Schubkette ohne Verdichtungsfahrt (Annahme: Herunterfahrt = gleich lang wie Ziehzeit)

| Verfahrweg Schubkette | | | | 25 | cm/sek |
|---|---|---|---|---|---|
| Nr. | cm | | Schubzeit (sek) | Ziehzeit | Summe Zeit |
| 1 | 600 | | 24 | 24 | 48 |
| 2 | 550 | | 22 | 22 | 44 |
| 3 | 500 | | 20 | 20 | 40 |
| 4 | 450 | | 18 | 18 | 36 |
| 5 | 400 | | 16 | 16 | 32 |
| 6 | 350 | | 14 | 14 | 28 |
| 7 | 300 | | 12 | 12 | 24 |
| 8 | 250 | | 10 | 10 | 20 |
| 9 | 200 | | 8 | 8 | 16 |
| 10 | 150 | | 6 | 6 | 12 |
| 11 | 100 | | 4 | 4 | 8 |
| 12 | 50 | | 2 | 2 | 4 |
| | | | | | |
| | | | Summe Verfahrzeit (sek) | | 312 |

Die Summe der Fahrzeiten der Schubkette bei einer 6m tiefen Bohrung und 12 Lagen dauert rund 300 Sekunden, also rund 6 Minuten. Das ist recht plausibel, das Zeitbudget für die gesamte Verfüllung beträgt 15 Minuten pro Bohrloch.

### Ausführungsbeispiel 2: Bindiger Baustoff / Dichtmaterial

### Rezeptur:

1 Tonne Baustoff besteht aus:
60% = 600kg quellfähiger Ton (Granulat Körnung 1...16mm, besser 5...16mm)
39,8% = 398 Liter Wasser
0,2% = 2,0 kg Hydrogel-Pulver

Das Baustoffgemisch sollte auf der Baustelle kurz vor dem Einbau hergestellt werden. Vielleicht - aber das haben wir noch nicht geprüft - kann das Gemisch auch fertig gemischt angeliefert werden (wie bei Beton im Fahrmischer).

### Herstellung:

Schritt 1: Erfindungsgemäßes Hydrogel-Pulver entsprechend einer Menge von 0,2% bezogen auf die gesamt Baustoffmenge in einen Rührbehälter / Rührmaschine / Mischer vorlegen.
Schritt 2: Wasser ca. 40% bezogen auf Baustoffmenge hinzugeben und langsam mischen/rühren (nicht kolloidal mischen oder wie mit Ultraturrax dispergieren!) bis sich ein nicht mehr tropfendes, fast schnittfestes glibberiges dennoch bröseliges Gel ergibt.
Schritt 3: Tongranulat entsprechend 60% der gesamt Baustoffmenge hinzugeben und durch Rühren vermischen.

Ergebnis: Die Tongranulate sind unregelmäßig von wassererfüllten aber festen Partikeln (die sehen aus wie geshredderte Gummibärchen) umgeben. Erfindungsgemäß geben diese Wasser-Gel-Partikel das Wasser unter Druck ab, dadurch gelangt das Wasser in den quellfähigen Ton, der dadurch aufquillt und zu einer dichten, homogenen Tonmasse wird.

## Patentansprüche

1. Verfahren zur lagenweisen Verfüllung und Verdichtung von bindigen Baustoffen (18), insbesondere von bindigen Bodenbaustoffen, in mindestens einem oberflächennahen Bohrloch, wobei der bindige Baustoff in das mindestens ein Bohrloch eingebracht wird und unter Verwendung einer Fördervorrichtung (10) umfassend mindestens eine Schubketteneinheit (13) umfassend einen Schubkettenvortrieb und einen mittels des Schubkettenvortriebs angetriebenen Stopfkolben (14), wobei der mindestens eine Stopfkolben an einer starren Schubkette des Schubkettenvortriebs über eine Gelenkverbindung angeordnet ist, und wobei der bindige Baustoff mindestens ein Absorptionsmittel in Form eines Hydrogels und verdichtungsfähigem Bodenbaustoff umfasst.

2. Verfahren nach Anspruch 1, **dadurch gekennzeichnet, dass** das mindestens eine Bohrloch mit einem Schutzrohr ausgekleidet ist und der bindige Baustoff, insbesondere portionsweise, in das Schutzrohr eingefüllt wird.

3. Verfahren nach Anspruch 2, **dadurch gekennzeichnet, dass** der Stopfkolben der Fördervorrichtung nach Einfüllen einer ersten Portion des bindigen Baustoffes in das Bohrloch den bindigen Baustoff durch das Schutzrohr bis zum jeweiligen Bohrlochtiefsten des Bohrloches schiebt und den bindigen Baustoff durch eine vertikale Bewegung des Stopfkolbens verdichtet.

4. Verfahren nach einem der Ansprüche 2-3, **dadurch gekennzeichnet, dass** das Schutzrohr während der Befüllung des Bohrloches mit dem bindigen Baustoff schrittweise in Abhängigkeit von der eingetragenen Menge an bindigen Baustoff aus dem Bohrloch herausgezogen wird.

5. Verfahren nach einem der Ansprüche 2-4, **dadurch gekennzeichnet, dass** nach Verdichten der ersten Portion des bindigen Baustoffes in dem mindestens einem Bohrloch der Stopfkolben aus dem Bohrloch herausgefahren wird, eine weitere Portion des bindigen Baustoffes in das Schutzrohr im Bohrloch eingefüllt wird, der Stopfkolben wieder in das Schutzrohr eingeführt wird und die weitere Portion des bindigen Baustoffes durch die Bewegung des Stopfkolbens verdichtet wird.

6. Verfahren nach einem der vorhergehenden Ansprüche, **dadurch gekennzeichnet, dass** der verdichtungsfähige Bodenbaustoff ausgewählt ist aus quellfähigen Tonmineralien, Bodenaushub oder Bohraushub.

7. Verfahren nach einem der vorhergehenden Ansprüche, **dadurch gekennzeichnet, dass** der bindige Baustoff aus einer Mischung enthaltend 50-70 Gew%, bevorzugt 60 Gew% quellfähigem Tonmineral, 0,1 - 0,5 Gew%, bevorzugt 0,2 Gew% eines Hydroygels und 39,5 - 39,9 Gew%, bevorzugt 39,8 Gew% Wasser (jeweils bezogen auf die Gesamtmenge an Baustoff) herstellbar ist.

8. Verfahren nach einem der vorhergehenden Ansprüche, **dadurch gekennzeichnet, dass** das Hydrogel auf Acrylbasis ist.

9. Verfahren nach einem der vorhergehenden Ansprüche , **dadurch gekennzeichnet, dass** der Bodenbaustoff ein quellfähiges Tonmineral ist ausgewählt aus einer Gruppe umfassend Bentonit, Montmorillonit, Kaolinite, Smektite, Illite, Chlorite oder Gemische davon.

10. Fördervorrichtung (10) zum Verfüllen und Verdichten von Bohrlöchern in einem Verfahren nach einem der vorhergehenden Ansprüche, umfassend mindestens eine Schubketteneinheit (13) umfassend einen Schubkettenvortrieb und einen mittels des Schubkettenvortriebs angetriebenen Stopfkolben (14), wobei der mindestens eine Stopfkolben an einer starren Schubkette des Schubkettenvortriebs über eine Gelenkverbindung angeordnet ist.

11. Fördervorrichtung nach Anspruch 10, **gekennzeichnet durch** eine Steuerungstechnik zur Steuerung des Schubkettenantriebs.

12. Fördervorrichtung nach einem der Ansprüche 10 bis 11, **dadurch gekennzeichnet, dass** über eine Schnittstelle zur Steuerungstechnik elektronische Daten zur Verdichtung, Einbaumenge und Geoposition bereitgestellt werden.

13. Fördervorrichtung nach einem der Ansprüche 10 bis 12, **dadurch gekennzeichnet, dass** Fördervorrichtung auf einem Fahrzeug oder Baugerät als Transportmittel montiert ist oder separat von dem Transportmittel verwendet wird.

## Claims

1. A method for the layer-by-layer filling and compaction of cohesive building materials (18), in particular cohesive soil building materials, in at least one borehole near the surface, wherein the cohesive building material is introduced into the at least one borehole and, using a conveying device (10) comprising at least one push-chain unit (13) comprising a push-chain drive and a stuffing piston (14) driven by the push-chain drive, wherein the at least one stuffing piston is arranged on a rigid push chain of the push chain drive via a hinged connection, and wherein the cohesive building material comprises at least one absorbent in the form of a hydrogel and compactable soil material.

2. Method according to claim 1, **characterized in that** the at least one borehole is lined with a protective tube and the cohesive building material is filled into the protective tube, in particular in portions.

3. Method according to claim 2, **characterized in that**, after filling a first portion of the cohesive building material into the borehole, the stuffing piston of the conveying device pushes the cohesive building material through the protective tube to the bottom of the borehole and compacts the cohesive building material by a vertical movement of the stuffing piston.

4. Method according to any one of claims 2-3, **characterized in that**, during the filling of the borehole with the cohesive building material, the protective tube is gradually withdrawn from the borehole in accordance with the amount of cohesive building material introduced.

5. Method according to any one of claims 2-4, **characterized in that**, after compacting the first portion of the cohesive building material in the at least one borehole, the stuffing piston is withdrawn from the borehole, a further portion of the cohesive building material is filled into the protective tube in the borehole, the stuffing piston is reinserted into the protective tube, and the additional portion of the cohesive building material is compacted by the movement of the stuffing piston.

6. Method according to any of the preceding claims, **characterized in that** the compactable soil building material is selected from swellable clay minerals, excavated soil, or drill cuttings.

7. Method according to any of the preceding claims, **characterized in that** the cohesive building material consists of a mixture containing 50-70 wt%, preferably 60 wt%, of swellable clay minerals, 0.1-0.5 wt%, preferably 0.2 wt%, of a hydrogel, and 39.5-39.9 wt%, preferably 39.8 wt%, of water (in each case based on the total amount of material).

8. Method according to any of the preceding claims, **characterized in that** the hydrogel is acrylic-based.

9. Method according to any of the preceding claims, **characterized in that** the soil building material is a swellable clay mineral selected from a group comprising bentonite, montmorillonite, kaolinite, smectite, illite, chlorite, or mixtures thereof.

10. A conveying device (10) for backfilling and compacting boreholes in a method according to any of the preceding claims, comprising at least one push-chain unit (13) comprising a push-chain drive and a stuffing piston (14) driven by the push-chain drive, wherein the at least one stuffing piston is arranged on a rigid push chain of the push chain drive via a hinged connection.

11. Conveying device according to claim 10, **characterized by** a control system for controlling the push chain drive.

12. Conveying device according to one of claims 10 to 11, **characterized in that** electronic data regarding compaction, placement volume, and geographic position are provided via an interface to the control system.

13. Conveying device according to any one of claims 10 to 12, **characterized in that** the conveying device is mounted on a vehicle or construction machine as a means of transport or is used separately from the means of transport.

## Revendications

1. Procédé de remplissage et de compactage par couches de matériaux de construction (18) cohésifs, en particulier de matériaux de terrassement cohésifs, dans au moins un trou de forage situé à proximité de la surface, dans lequel le matériau de construction cohésif est introduit dans l'au moins un trou de forage et est compacté par couches en utilisant un dispositif de convoyage (10) comprenant au moins une unité de chaîne de poussée (13) comprenant un entraînement par chaîne de poussée et un piston de bourrage (14) entraîné au moyen de l'entraînement par chaîne de poussée, dans lequel l'au moins un piston de bourrage est disposé sur une chaîne de poussée rigide de l'entraînement par chaîne de poussée par l'intermédiaire d'une liaison articulée, et dans lequel le matériau de construction cohésif comprend au moins un moyen d'absorption sous la forme d'un hydrogel et un matériau de terrassement compactable.

2. Procédé selon la revendication 1, **caractérisé en ce que** l'au moins un trou de forage est revêtu d'un tube de protection et le matériau de construction cohésif est transvasé, en particulier par portions, dans le tube de protection.

3. Procédé selon la revendication 2, **caractérisé en ce que** le piston de bourrage du dispositif de convoyage pousse le matériau de construction cohésif à travers le tube de protection jusqu'à la profondeur de trou de forage respective du trou de forage après le transvasement d'une première portion du matériau de construction cohésif dans le trou de forage et compacte le matériau de construction cohésif par un déplacement vertical du piston de bourrage.

4. Procédé selon l'une quelconque des revendications 2-3, **caractérisé en ce que** le tube de protection est extrait progressivement du trou de forage pendant le remplissage du trou de forage avec le matériau de construction cohésif en fonction de la quantité de matériau de construction cohésif introduite.

5. Procédé selon l'une quelconque des revendications 2 à 4, **caractérisé en ce qu'**après le compactage de la première portion du matériau de construction cohésif dans l'au moins un trou de forage, le piston de bourrage est extrait du trou de forage, une autre portion du matériau de construction cohésif est transvasée dans le tube de protection dans le trou de forage, le piston de bourrage est réintroduit dans le tube de protection et l'autre portion du matériau de construction cohésif est compactée par le déplacement du piston de bourrage.

6. Procédé selon l'une quelconque des revendications précédentes, **caractérisé en ce que** le matériau de terrassement compactable est choisi parmi des minéraux d'argile gonflables, l'excavation de sol ou l'excavation de forage.

7. Procédé selon l'une quelconque des revendications précédentes, **caractérisé en ce que** le matériau de construction cohésif peut être fabriqué à partir d'un mélange contenant 50-70 % en poids, de préférence 60 % en poids d'un minéral d'argile gonflable, 0,1 - 0,5 % en poids, de préférence 0,2 % en poids d'un hydroygel et 39,5 - 39,9 % en poids, de préférence 39,8 % en poids d'eau (chacun par rapport à la quantité totale de matériau de construction).

8. Procédé selon l'une quelconque des revendications précédentes, **caractérisé en ce que** l'hydrogel est à base d'acrylique.

9. Procédé selon l'une quelconque des revendications précédentes, **caractérisé en ce que** le matériau de terrassement est un minéral d'argile gonflable choisi dans un groupe comprenant la bentonite, la montmorillonite, la kaolinite, la smectite, l'illite, la chlorite ou leurs mélanges.

10. Dispositif de convoyage (10) pour le remplissage et le compactage de trous de forage dans un procédé selon l'une quelconque des revendications précédentes, comprenant au moins une unité de chaîne de poussée (13) comprenant un entraînement par chaîne de poussée et un piston de bourrage (14) entraîné au moyen de l'entraînement par chaîne de poussée, dans lequel l'au moins un piston de bourrage est disposé sur une chaîne de poussée rigide de l'entraînement par chaîne de poussée par l'intermédiaire d'une liaison articulée.

11. Dispositif de convoyage selon la revendication 10, **caractérisé par** une technique de commande pour commander l'entraînement par chaîne de poussée.

12. Dispositif de convoyage selon l'une quelconque des revendications 10 à 11, **caractérisé en ce que** des données électroniques de compactage, de quantité de montage et de géolocalisation sont mises à disposition par l'intermédiaire d'une interface avec la technique de commande.

13. Dispositif de convoyage selon l'une quelconque des revendications 10 à 12, **caractérisé en ce que** le dispositif de convoyage est monté sur un véhicule ou un engin de chantier comme moyen de transport ou est utilisé séparément du moyen de transport.
